# EUROPEAN PATENT APPLICATION

(11) **EP 0 996 029 A2**
(43) Date of publication of application: **26.04.2000**
(21) Application number: 99120547.7
(22) Date of filing: 15.10.1999
(51) Int. Cl.: G02F 1/15

(54) **Gel electrolyte, cell and electrochromic element**

(30) Priority: 19.10.1998 JP 31393898; 30.09.1999 JP 27864999
(71) Applicant: CANON KABUSHIKI KAISHA, Tokyo (JP)
(72) Inventor: Horikiri, Tomonari, c/o Canon K. K., Tokyo (JP); Kikuchi, Yoshihiko, c/o Canon K. K., Tokyo (JP)
(74) Representative: Weser, Wolfgang

(57) **Abstract**

A gel electrolyte contains at least a gelling agent and a material of high ion conductivity which is liquid at working temperature. The gel electrolyte is stably serviceable for a long period of time, and high in mechanical strength and electroconductivity.

## Description

### BACKGROUND OF THE INVENTION

### Field of the Invention

This invention relates to a gel electrolyte, which can be used as a solid thin film electrolyte useful for electrochemical elements such as cells, condensers, electrochemical sensors and electrochromic elements. This invention also relates to cells and electrochromic elements using the gel electrolyte.

### Related Background Art

Recently, importance of electrolyte has been increasing with the technical progress in various electrochemical elements such as cells and electrochromic elements. In many conventional electrochemical elements, liquid electrolytes with supporting electrolytes dissolved in water or organic solvents. However, the liquid electrolyte has various disadvantages, such as the leakage due to temporal deterioration in long term storage or due to damage of the electrochemical element, and difficulty in making the electrochemical element compact in size or into a thin film. Therefore, the electrolyte solidification has been actively studied to develop solid thin-film electrolytes easy to handle, high in safety and in the ion transport number.

Since inorganic materials such as alumina are low in ion conductivity at ordinary temperature, polymers have been studied mainly for the solid electrolytes.

Researches on polymer-based solid electrolytes fall into two general approaches.

One is a gel electrolyte holding a liquid electrolyte in a polymer matrix network.

Such a gel electrolyte, swelled polymer with a liquid electrolyte, can be produced by polymerizing the monomer in a liquid electrolyte solution, or by immersing a polymer matrix that has been polymerized beforehand in a liquid electrolyte for swelling.

In such a gel electrolyte, the polymer matrix basically functions to include the liquid electrolyte with no contribution to ion conductance, and the liquid electrolyte in the polymer matrix is mainly responsible for ion conductance. This type of gel electrolyte has a high ion conductivity, close to that of the liquid electrolyte, because of the comparatively free movement of the ions in the polymer matrix.

The other approach is the polymer-based solid electrolyte where a supporting electrolyte is dissolved in a polymer having a polyether structure, such as polyethylene oxide, polypropylene oxide, a derivative or copolymer thereof or the like. The polyether-structured polymer can dissolve one monovalent cation by 4 oxygen atoms of the ether structure, and the cations hop the ether structure in the polymer chain for conductance. This type of electrolytes basically contains no solution, and is essentially free of leakage problems.

However, such conventional polymer solid electrolytes need a large quantity of polyether, and as a result, the gel electrolytes obtained tend to be much lower in conductivity than the original electrolytic solution itself.

It is known that a compound having self-assembling characteristics (self-assembling compound), which forms a fibrous associated body driven by the intermolecular force such as hydrogen bonding, can gel a liquid with a very small quantity. Since such a self-assembling compound becomes a gel as the fibrous associated bodies entwine with each other to form a network structure, to loose fluidity, and holding a liquid in its voids, the gel can have flexible and fine functions as a material differing from conventional 3-dimensionally cross-linked structure of polymers, or a random hydrogen bond net work structure of a natural polymer such as agar and gelatin.

A thin film of organic electrolyte of a high ion transport number can be formed with such a self assembling compound, since it can gel with a small amount of a liquid and the gelled substance (associated bodies) is larger than the polymer chain. Moreover, by using a liquid electrolyte of which dissolution in a solvent is not necessary, conductivity lowering can be prevented.

Heretofore, a gel electrolyte formed from a self-assembling compound and a liquid electrolyte such as a salt liquid at room temperature has been disclosed in Japanese Patent No. 2599763 where dibenzylidene sorbitol derivative is used. However, dibenzylidene sorbitol derivatives are relatively unstable, freeing aldehydes by the action of temperature, moisture or the like to give off offensive odor and, it may color in some cases. Thus, the addition of a stabilizer, such as sorbic acid, potassium sorbate, an alkali metal compound, alkaline organic amine or the like, must be added to stabilize the gel over a long period of time (Japanese Patent Publication Nos. 7-17648 and 5-202055).

### SUMMARY OF THE INVENTION

In view of the aforementioned technical background, the present invention intends to provide a chemically stable gel electrolyte of which conductivity is prevented from deterioration by using a gelling agent capable of gelling a liquid electrolyte with a small amount. The present invention also intends to provide highly efficient cells and electrochromic elements containing a gel electrolyte of high chemical stability and conductivity.

According to a first aspect of the present invention, there is provided a gel electrolyte containing at least a gelling agent and a material of high ion-conductivity which is liquid at working temperature.

According to another aspect of the present invention, there is provided a cell comprising an anode, an electrolyte and a cathode, wherein the electrolyte contains at least a gelling agent and a material of high ion-conductivity which is liquid at working temperature.

Further, according to further aspect of the present invention there is provided an electrochromic element comprising a pair of transparent electrodes between which an electrochromic layer which develops color on reduction and a transparent ionic conducting layer exist, wherein the transparent ion conducting layer contains a gel electrolyte comprising at least a gelling agent and a highly ion-conductive substance which is liquid at working temperature.

### BRIEF DESCRIPTION OF THE DRAWINGS

FIG. 1 illustrates a schematic cross-sectional view of a secondary cell as one of the embodiments of the present invention;
FIG. 2 illustrates a schematic cross-sectional view of a button-shaped (flat) cell as one of the embodiments of the present invention;
FIG. 3 illustrates a schematic cross-sectional view of a cylindrical cell as one of the embodiments of the present invention;
FIG. 4 illustrates a schematic cross-sectional view of an electrochromic cell as one of the embodiments of the present invention; and
FIG. 5 is a graph showing conductivity change with temperature of the gel electrolyte prepared in Example 1.

### DETAILED DESCRIPTION OF THE INVENTION

The present invention is described in more detail with preferred embodiments.

After an extensive study to achieve the above-mentioned objectives, the inventors of the present invention have found that a liquid substance of high ionic conductivity which is liquid at working temperature (hereinafter referred to as a "liquid electrolyte") can be gelled by adding a gelling agent, in particular a self-assembling compound which gels forming a polymeric associated body by intermolecular interactions, e.g., hydrogen or coordination bonding, and that the gelled substance can be suitably used as a gel electrolyte.

The self-assembling compounds useful as the gelling agent for the present invention preferably have at least one substituent selected from the group consisting of hydroxyl, amino, amide, carboxyl and ammonium groups. Examples of such compounds are represented by the formulas (1) to (26).

The compounds represented by formulas (1) to (26) are described below.

### Compounds Nos. (1) and (2)

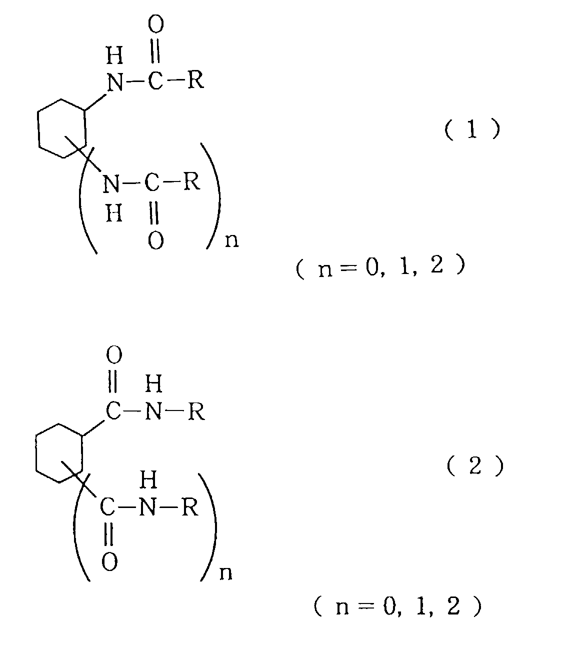

The cyclohexane derivatives useful for the present invention, represented by formulae (1) and (2) fall into two general categories; one having an amide substituent bonded to the cyclohexane ring through a nitrogen atom and the other having an amide substituent bonded to the ring through a carbon atom, both substituents capable of hydrogen bonding. Number of the amide groups and their positions on the cyclohexane ring are not defined. The cyclohexane ring may have substituents not participating in hydrogen bonding, e.g., methyl or ethyl.

The substituent represented by R in formula (1) or (2) is hydrogen, or a C₁ - C₂₉ straight-chain or branched aliphatic hydrocarbon group. More specifically, the straight-chain aliphatic hydrocarbon substituents useful for the present invention include nonyl, decyl, undecyl, lauryl, tridecyl, myristyl, pentadecyl, palmityl, heptadecyl, stearyl, arachidyl, docosanoyl, tricosyl, tetracosyl, hexacosyl and triaconsyl groups, and branched aliphatic hydrocarbon substituents include 3,5,5-trimethylhexyl, 2-hexyldecyl and 2-methylhexadecyl groups, but not limited to the above. These groups represented by R may be the same or different.

The substituent may have the same structure as the liquid electrolyte.

(n) in formula (1) or (2) is an integer of 0, 1 or 2.

### Compound No. (3)

R³-NH-R⁴ (3)

The amino acid derivatives represented by formula (3) may be used, where R³ is an amino acid monomer or dimer having protected amino group(s), and R⁴ is a C₁ - C₂₉ aliphatic hydrocarbon or an aryl group. The substituent for protecting the amino group may be those normally used for peptide synthesis including carbobenzoxy group (Z group) and quaternary butyloxycarbonyl group (Boc group).

The amino acid may any known amino acid, and the dimer may be composed of the same or different amino acids. They are preferably optically active. More specifically, the preferable amino acids include Z-L-valyl, Z-D-valyl, Z-L-valyl-L-valyl, Z-L-isoleucyl, Z-D-valyl-L-valyl, Z-L-leucyl-β-alanyl, Z-L-valyl-L-leucyl, and Z-L-valyl-β-alanyl. -NHR⁴ is octadecyl amino (excluding NHC₁₈H₃₅), nonylamino, decylamino, undecylamino, laurylamino, tridecylamino, tetradecylamino, pentadecylamino, hexadecylamino, heptadecylamino, stearylamino, or nonanodecacylamino group, but not limited to the above. Compounds Nos. (4) and (5)

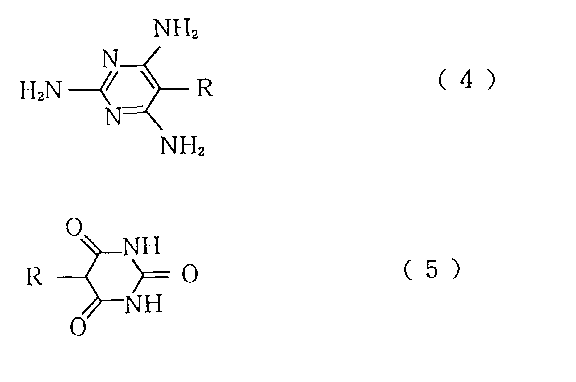

The triaminopyrimidine derivative represented by formula (4) and the barbiturate derivative represented by formula (5) may be used to form a gel by mixing them each other. R in formula (4) or (5) is, as defined above, a straight-chain or branched aliphatic hydrocarbon group having a carbon number of 1 to 29. The preferable compounds include dodecyl, hexadecyl and 3,7-dimethyl octyl groups, but not limited to them.

### Compound No. (6)

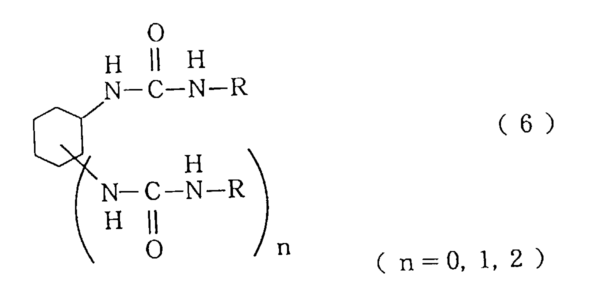

The alkyl urea derivatives represented by formula (6) are compounds having at least one urea group.

R is as defined above, but not specifically limited. These substituents may be the same or different each other.

### Compound No. (7)

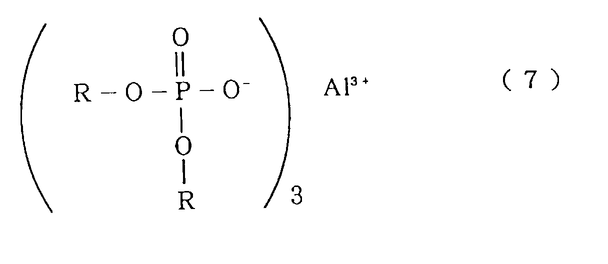

The aluminum phosphate derivatives represented by formula (7) can be also used, where R is as defined above, but not specifically limited. The two substituents in the derivative may be the same or different.

### Compound No. (8)

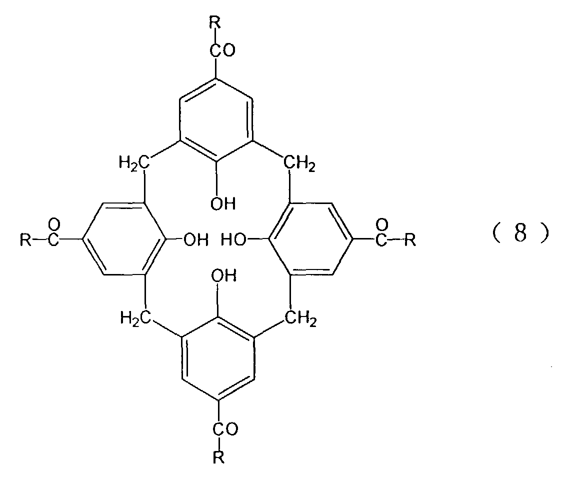

The phenol-based cyclic-oligomer derivatives represented by formula (8) can be used, where R is as defined above, preferably undecyl, but not specifically limited.

### Compound No. (9)

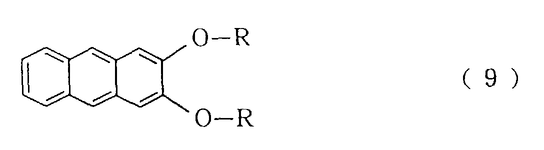

The dialkoxyanthracene derivatives represented by formula (9) can be used, where R is as defined above, preferably decyl or hexadecyl, but not specifically limited.

### Compound No. (10)

R⁵COOH (10)

Formula (10) represents the hydroxycarboxylic acid derivatives, where R⁶ is a straight-chain aliphatic hydrocarbon group having a carbon number of 1 to 29, substituted by one hydroxyl group. Following formula represents 12-hydroxyoctadecanoic acid, as a typical compound.

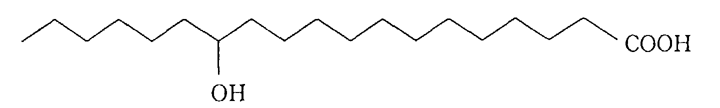

Examples of these compounds also include 3-hydroxypropyl acid, 2-hydroxybutyl acid, 3-hydroxymyristic acid and 16-hydroxyhexadecanoic acid. Compound No. (11)

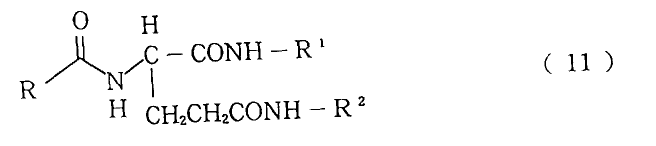

Representative compounds of the carbonylamino acid diamide derivatives are carbonylglutamic acid bisamide derivatives represented by formula (11), wherein, R, R¹ and R² are each hydrogen, or a straight-chain or branched aliphatic hydrocarbon group having a carbon number of 1 to 29. More specifically, the straight-chain aliphatic hydrocarbon groups useful for the present invention include nonyl, decyl, undecyl, lauryl, tridecyl, myristyl, pentadecyl, palmityl, heptadecyl, stearyl, arachidyl, docosanoyl, tricosyl, tetracosyl, hexacosyl and triaconsyl groups, and branched aliphatic hydrocarbon substituents including 3,5,5-trimethylhexyl, 2-hexyldecyl and 2-methyihexadecyl groups, but not limited thereto. The amino acid is also not limited to glutamic acid.

### Compound No. (12)

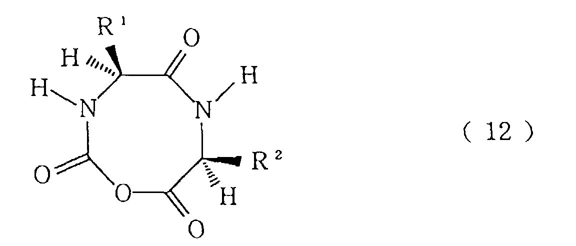

The cyclic depsipeptide derivatives represented by formula (12) may be used, wherein R¹ and R² are as defined above, but not specifically limited.

### Compound No. (13)

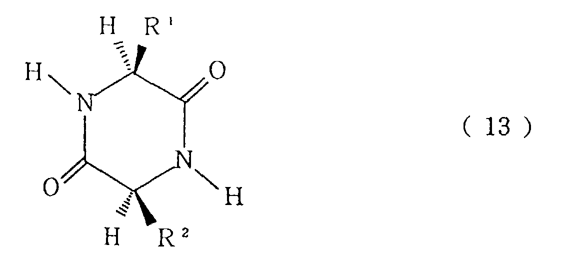

The cyclic dipeptide derivatives represented by formula (13) is obtained by condensation reaction using a neutral and an acidic amino acid as the starting materials. The starting amino acids are not specifically limited. R¹ and R² in the formula (13) are as defined above, but not specifically limited.

### Compound No. (14)

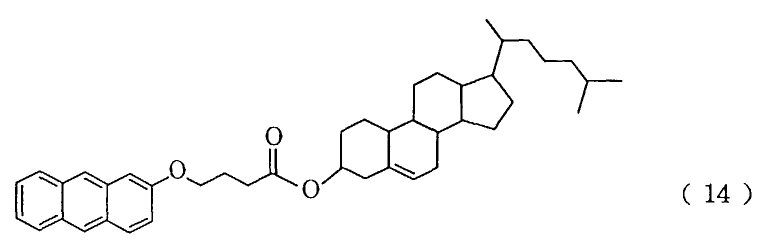

The cholesterol derivatives represented by formula (14) can be used.

### Compound No. (15)

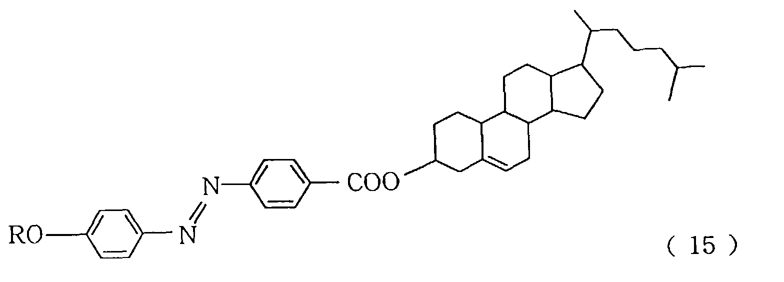

The cholesterol derivatives represented by formula (15) can be used, where R is as defined above, but not specifically limited.

### Compound No. (16)

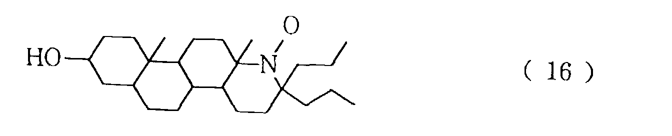

The spin-labeled steroid derivatives represented by formula (16) can be used.

### Compound No. (17)

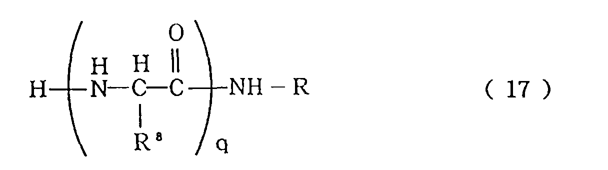

The oligo (α-amino acid) derivatives represented by formula (17) has an α-amino acid oligomer skeleton, where R is hydrogen or an aliphatic hydrocarbon group having a carbon number of 1 to 19; R⁸ is hydrogen, or a C₁ - C₅ aliphatic hydrocarbon or an aryl group; and (q) is 2 to 20.

Degree of polymerization (q) is preferably 5, 10 or 20, and R⁹ is preferably a long-chain ester group, but not specifically limited.

### Compound No. (18)

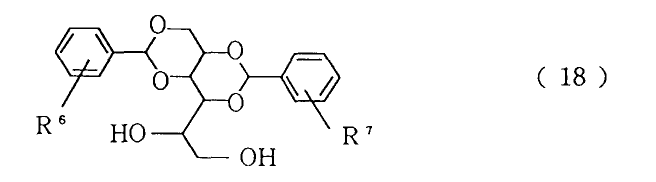

The dibenzylidene sorbitol derivative represented by formula (18) can be used, wherein R⁶ and R⁷ are each an aliphatic hydrocarbon group having a carbon number of 1 to 29 or an aryl group.

### Compound Nos. (19) - (26)

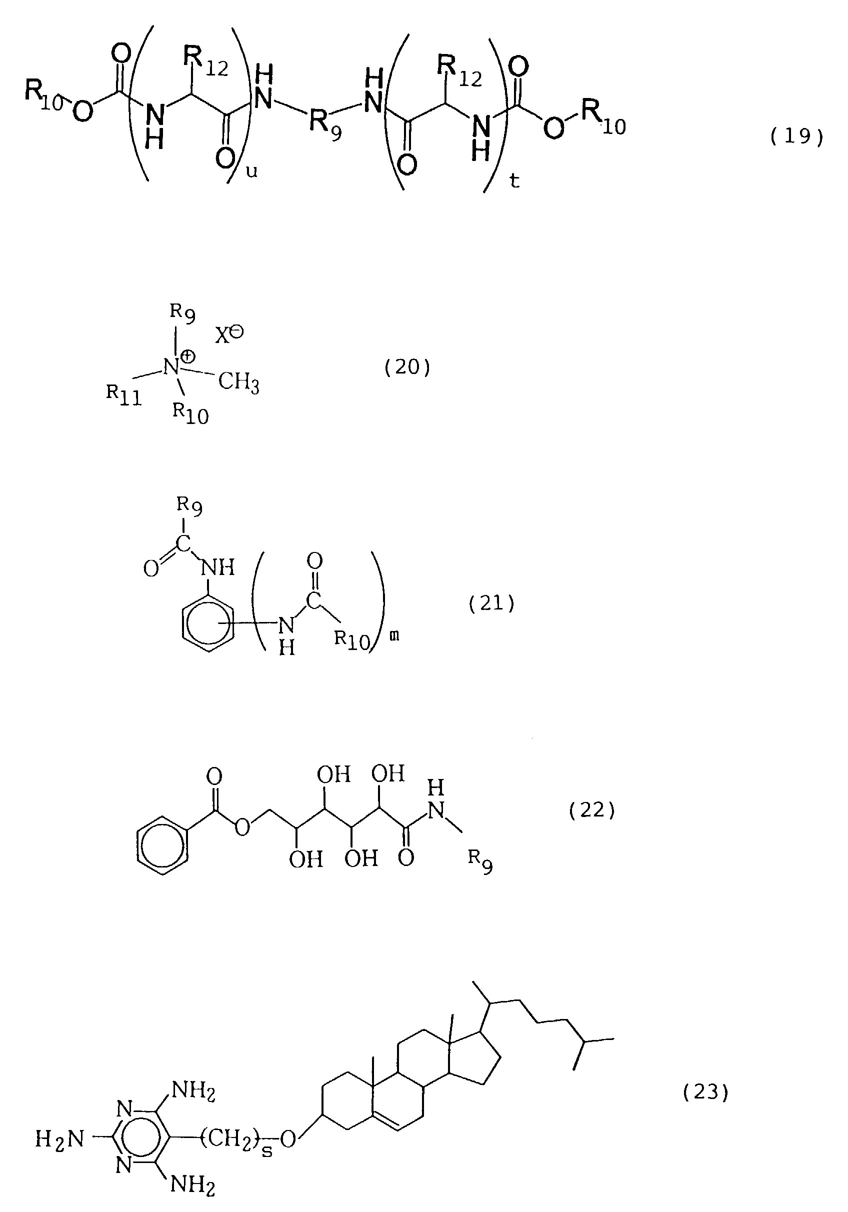

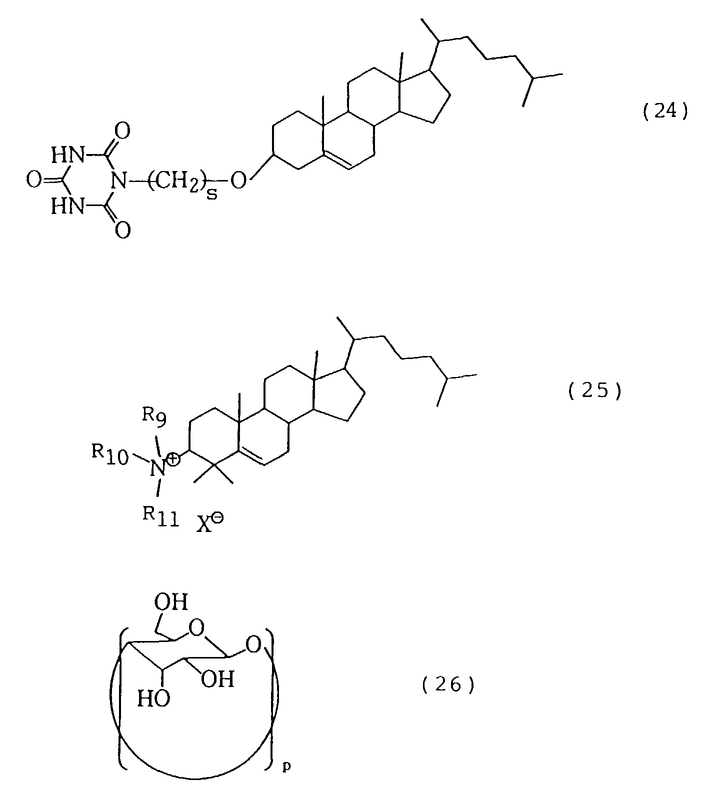

In formulas (19) - (26), R₉, R₁₀ and R₁₁ are each hydrogen, or a straight-chain or branched hydrocarbon group having a carbon number of 1 to 29; R₁₂ is a side chain of an amino acid; X is a halogen; p is an integer of 6 to 8; m is an integer of 0 to 5; and n is an integer of 0 to 29, and u and t are an integer of 1 - 500.

The constituent amino acid of the binary-headed amino acid derivatives of the present invention represented by formula (19) includes glycine, alanine, valine, leucine, isoleucine and phenylalanine, preferably valine and leucine. In this case, amino acids may be dimer or higher polymer where u and t are in a range of 1 - 500, preferably 1 - 10. The amino acids may be the same or different.

In formula (19), R₉ is hydrogen, or a straight-chain or branched hydrocarbon group having a carbon number of 1 to 29. The straight-chain aliphatic hydrocarbon groups include nonyl, decyl, undecyl, lauryl, tridecyl, myristyl, pentadecyl, palmityl, heptadecyl, stearyl, arachidyl, docosanoyl, tricosyl, tetracosyl, hexacosyl and triaconsyl groups, and the branched aliphatic hydrocarbon groups include 3,5,5-trimethylhexyl, 2-hexyldecyl and 2-methylhexadecyl groups.

The group represented by R₁₀, as R₉, is hydrogen, or a straight-chain or branched hydrocarbon group having a carbon number of 1 to 29, most preferably ethyl. Each of R₉ and R₁₀ may have the same structure as the liquid electrolyte described later.

The group represented by R₁₂ corresponds to a side chain of an amino acid including hydrogen, alkyl, and aromatic group.

The compounds represented by formula (20) are quaternary ammonium derivatives of trialkyl amine, wherein R₉ to R₁₁ are each hydrogen, or a straight-chain or branched hydrocarbon group having a carbon number of 1 to 29. The straight-chain aliphatic hydrocarbon groups include nonyl, decyl, undecyl, lauryl, tridecyl, myristyl, pentadecyl, palmityl, heptadecyl, stearyl, arachidyl, docosyl, tricosyl, tetracosyl, hexacosyl, triaconsyl and 10-undecyl groups, and the branched aliphatic hydrocarbon groups include 3,5,5-trimethylhexyl, 2-hexyldecyl and 2-methylhexadecyl groups. These substituents may be the same or different each other. The most preferable group is octadecyl, and it is most preferable that all R₉ to R₁₁ are octadecyl. They may have the same structure as the liquid electrolyte described later.

The compounds represented by formula (21) are benzene amide derivatives, wherein the number of the bonded amide groups as the side groups is not defined, i.e., m is an integer of 0 to 5. Position of the amide group on the benzene ring is not defined. Substituents such as methyl or ethyl not participating in hydrogen bonding may be present on the benzene ring.

R₉ and R₁₀ are each hydrogen, or a straight-chain or branched hydrocarbon group having a carbon number of 1 to 29. The straight-chain aliphatic hydrocarbon groups include nonyl, decyl, undecyl, lauryl, tridecyl, myristyl, pentadecyl, palmityl, heptadecyl, octadecyl, arachidyl, docosyl, tricosyl, tetracosyl, hexacosyl, triaconsyl and 10-undecyl groups, and the branched aliphatic hydrocarbon groups include 3,5,5-trimethylhexyl, 2-hexyldecyl and 2-methylhexadecyl groups. The most preferable group is octadecyl. These groups may be the same or different. They may have the same structure as the liquid electrolyte described later.

The compound represented by formula (22) is a gluconic acid amide derivative, wherein R₉ is each hydrogen, or a straight-chain or branched hydrocarbon group having a carbon number of 1 to 29. More specifically, the straight-chain aliphatic hydrocarbon groups useful for the present invention include nonyl, decyl, undecyl, lauryl, tridecyl, myristyl, pentadecyl, palmityl, heptadecyl, stearyl, arachidyl, docosyl, tricosyl, tetracosyl, hexacosyl, triaconsyl and 10-undecyl groups, and the branched aliphatic hydrocarbon groups include 3,5,5-trimethylhexyl, 2-hexyldecyl and 2-methylhexadecyl groups. They may have the same structure as the liquid electrolyte described later.

The cholesterol derivatives represented by formulae (23) and (24) are normally used in mixture. The mixing ratio is not limited but preferably 1:1 by mole ratio. In each formula, s is 0 to 29, preferably 6.

The compounds represented by formula (25) are N-(3-cholesteryl)-N-methyl-N,N'-dialkyl ammonium halide derivatives, wherein R₉ to R₁₁ are each hydrogen, or a straight-chain or branched hydrocarbon group having a carbon number of 1 to 29. More specifically, the straight-chain aliphatic hydrocarbon groups include nonyl, decyl, undecyl, lauryl, tridecyl, myristyl, pentadecyl, palmityl, heptadecyl, stearyl, arachidyl, docosyl, tricosyl, tetracosyl, hexacosyl, triaconsyl and 10-undecyl groups, and the branched aliphatic hydrocarbon groups include 3,5,5-trimethylhexyl, 2-hexyldecyl and 2-methylhexadecyl groups. These substituents may be the same or different. They may have the same structure as the liquid electrolyte described later.

X in the formula is a halogen, e.g., chlorine, bromine and iodine, chlorine being more preferable.

The compounds represented by formula (26) are cyclodextrins, α(p = 6), β(p = 7) and γ(p = 8) types, of which β type is more preferable.

The gelling agents represented by formulae (1) to (26) may be used alone or in combination thereof.

The gel electrolyte of the present invention is composed of the above gelling agent and a liquid electrolyte. Any liquid electrolyte may be used, so long as it is liquid at working temperature and high in ionic conductivity. Imidazolium and pyridinium salts, shown in Table 1 can be preferably used. Types of the liquid electrolyte are not specifically limited, and a mixture of two or more types may be used.

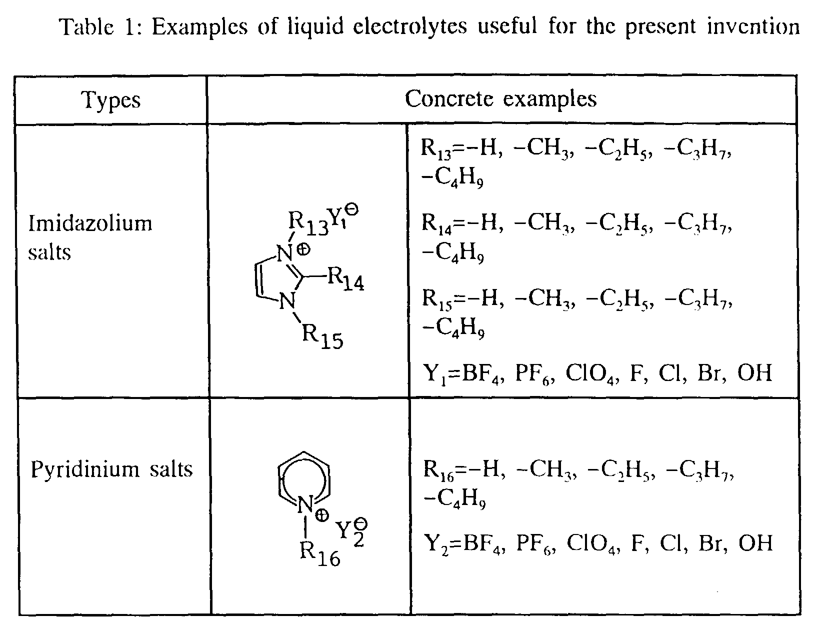

Of the liquid electrolytes shown in Table 1, the preferable imidazolium salts are those having -C₂H₅ as R₁₃, -H as R₁₄ and -CH₃ as R₁₅, and the preferable pyridinium salts are those having -C₃H₇ as R₁₆. The particularly preferable anions represented by Y₁⁻and Y²- include BF₂⁻, PF₆⁻, ClO₂⁻, CH₃SO₃⁻ and AlCl₄⁻.

In the present invention, the above liquid electrolyte and the gelling agent are mixed and heated as required to dissolve into each other and then cooled to room temperature, to obtain the gel electrolyte of the invention. The amount of the gelling agent to be used is approximately 0.1 to 20 part by weight, preferably 1 to 10 parts by weight, to 100 parts by weight of the liquid electrolyte. Within the above range, the gel electrolyte has good electrical properties and can gel sufficiently so that it can be formed into and remain in a desired shape.

In preparing the gel electrolyte of the present invention, a small amount of water or an organic solvent may be added to the mixture of the gelling agent and liquid electrolyte to improve the compatibility of these components and homogenize the mixture. Water or solvent may be removed by evaporation in an appropriate stage.

In the present invention, a solid electrolyte may also be added to the liquid electrolyte when the gel electrolyte is prepared. The solid electrolytes useful for the present invention include alkali metal salts of inorganic acids, alkali metal salts of organic acids, quaternary ammonium salts and anionic surfactants as listed in Table 2. The amount of the solid electrolyte to be added is not specifically limited, but normally in a range of from 0.1 to 100 parts by weight to 100 parts by weight of the liquid electrolyte.

**Table 2**

| Examples of solid electrolytes useful for the present invention | |
|---|---|
| Types | Concrete examples |
| Inorganic acid anion-alkali metal salts | XAsF₆, XPF₆, XBF₄, XClO₄ |
| | (X=H, Li, K, Na) |
| Organic acid anion-alkali metal salts | XCF₃SO₃, XCₙF₂ₙ₊₁SO₃ (n=2, 4, 8), |
| | XN(CF₃SO₂)₂, XC(CF₃SO₂)₃, XB(CH₃)₄, |
| | XB(C₆H₅)₄ |
| | (X=H, Li, K, Na) |
| Quaternary ammonium salts | [CH₃(CH₂)₃]₄N·Y₃, |
| | CₙH₂ₙ₊₁N(CH₃)₃·Y₃(n=10 - 18), |
| | CₙH₂ₙ₊₁N(CH₃)₂·Y₃(n=10 - 18), |
| | (Y₃=BF₄, PF₆, ClO₄, F, Cl, Br, OH) |
| Anionic surfactants | CₙH₂ₙ₊₁COO·X(n=10 - 18), |
| | CₙH₂ₙ₊₁OCₘH₂ₘCOO·X(n=10 - 18, m=10 - 18), |
| | C₁₀H₇COO·X, |
| | CₙH₂ₙ₊₁C₁₀H₆COO·X(n=10 - 18), |
| | CₙH₂ₙ₊₁SO₃·X(n=10 - 18), |
| | CₙH₂ₙ₊₁OCmH₂ₘSO₃·X(n=10 - 18, m=10 - 18), |
| | C₁₀H₇SO₃·X, |
| | CₙH₂ₙ₊₁C₁₀H₆SO₃·X(n=10 - 18), |
| | CₙH₂ₙ₊₁OSO₃·X(n=10 - 18), |
| | (X=H, Li, K, Na) |

A stabilizer may also be added in the present invention to stabilize the gel electrolyte.

The stabilizer useful for the present invention is not specifically limited and may be selected from the known stabilizers including dimethyl formamide, dimethoxy ethane, alcohols (e.g., ethanol), and carbonates (e.g., polycarbonates), those compatible with the liquid electrolyte and the gelling agent in it.

The gel electrolyte thus prepared can be used for electrodes, condensers and electrochemical elements, e.g., electrochemical sensors and electrochromic elements. It is free of problems such as the electrolyte leakage, and excellent in long term stability.

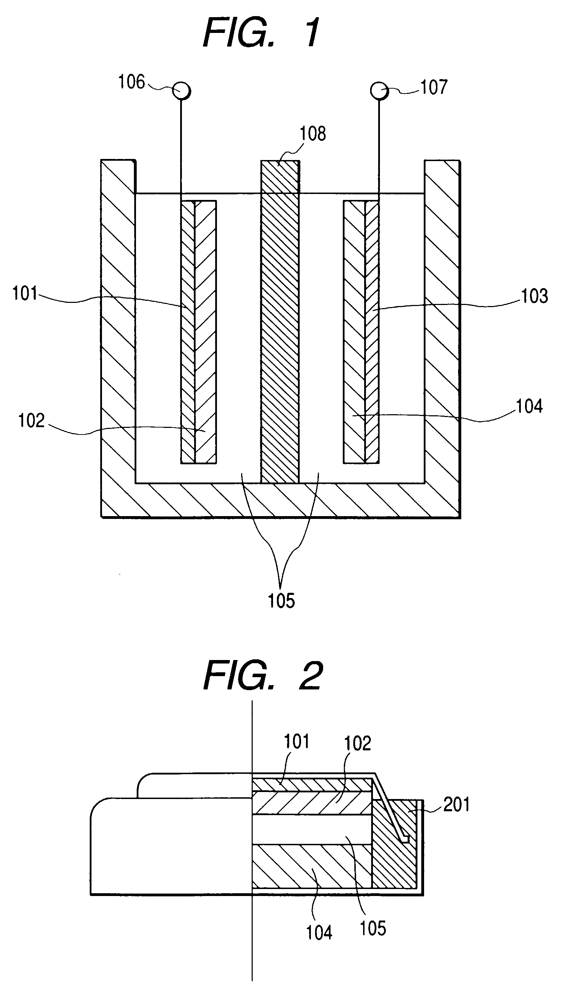

Then the cell of the present invention is described by referring to FIG. 1, which illustrates a schematic cross-sectional view of an embodiment of the present invention, wherein 101: cathode collector, 102: cathode active material, 103: anode collector, 104: anode active material, 105: gel electrolyte, 106: cathode terminal, 107: anode terminal, and 108: separator.

The anode active material useful for the present invention is not specifically limited and may be selected from the known materials. More specifically, they include manganese dioxide for the manganese cell; mercury oxide, silver oxide, and nickel oxyhydroxide for the alkali cell; graphite fluoride, manganese dioxide and copper oxide for the lithium cell; nickel oxyhydroxide for the nickel-cadmium storage battery; and lithium-manganese oxide, lithium-cobalt oxide and lithium-nickel oxide for the lithium secondary battery. The other materials useful for the present invention include electroconductive polymers, e.g., polypyrrole, polyaniline, polythiophene and polyparaphenylene derivatives; and disulfides represented by the general formula (R(S)ₘ)ₙ where R is an aliphatic or aryl group; S is sulfur; m is an integer of 1 or more; and n is an integer of 2 or more.

The cathode active material useful for the present invention is not specifically limited and may be selected from the known materials. More specifically, they include zinc for the manganese or alkali cell; lithium for the lithium cell; lead for the lead storage battery; cadmium for the nickel-cadmium storage battery; materials capable of occluding lithium ions (represented by carbon and coke), metallic lithium and alloys of lithium with other metals for the lithium secondary battery.

One of the specific examples of the cells of the present invention is a lithium secondary battery with LiMnO₂, LiMn₂O₄, LiCoO₂ or LiNiO₂ as the anode active material; a material capable of occluding lithium ions or metallic lithium as the cathode active material; and the gel electrolyte of the present invention as the electrolyte.

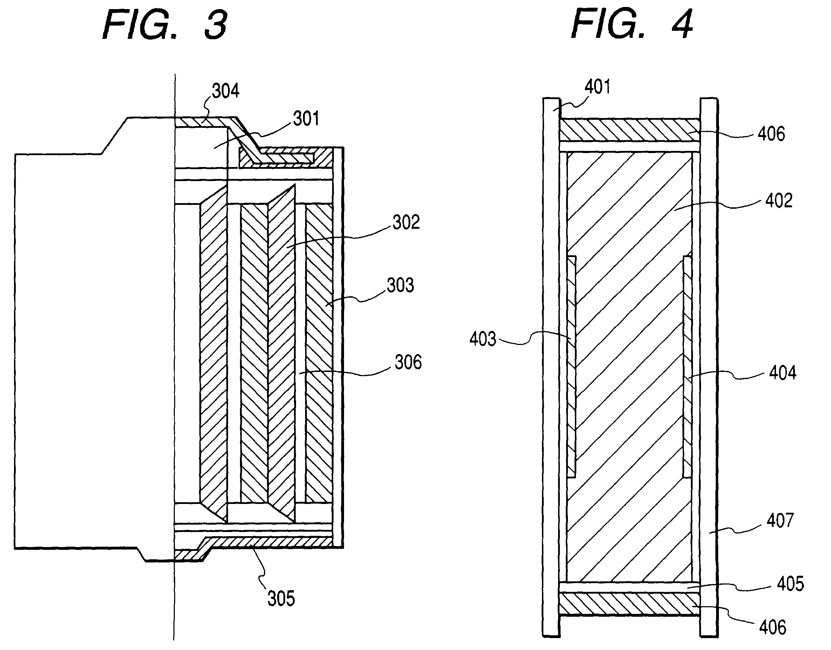

The cell of the present invention may be coin-shaped as shown in FIG. 2 or cylindrical as shown in FIG. 3, wherein 201 in FIG. 2 is an insulating packing.

The electrochromic element, an embodiment of the present invention, is described by referring to FIG. 4, wherein, 401: transparent electrode layer, 402: gel electrolyte sealed between the electrodes 401 and 403: electrochromic layer, 404: charge balance compensator layer, 405: spacer, 406: shield, and 407: electrode opposite to the layer 401.

The electrochromic (EC) material undergoes an electrochemical redox reaction according to the applied voltage with a phenomenon of layer color change. The EC material for the electrochromic element of the present invention may be adequately selected from the known EC materials. More specifically, the EC materials useful for the present invention include inorganic compounds, e.g., tungsten oxide, molybdenum oxide, vanadium oxide, indium oxide and rhodium oxide; and organic compounds, e.g., heptyl viologen bromide, polyaniline, polypyrrole, polythiophene, polyacetylene, polyphenylene and a derivative thereof.

The charge balance compensation layer 404 is a layer to compensate the charge in the whole system, changing as a result of the redox reaction occurring in the electrochromic layer 403. The materials useful for the compensator include indium oxide, carbon and tungsten oxide. The charge balance compensation layer 404 may be dispensed with, depending on the type of EC material, or by adding a redox species which has no effect on display to the electrolytic solution.

As described above, the present invention provides a gel electrolyte serviceable for a long period of time, superior in mechanical strength and electroconductivity.

The gel electrolyte of the present invention can be produced by a much simpler process with a smaller number of steps than the conventional processes for the polymer gel electrolyte production with less production cost, because it can be prepared only by heating a mixture of the gelling agent and liquid electrolyte to accelerate dissolution, followed by cooling.

The present invention is described more specifically by Examples and Comparative Examples.

Hereinafter, "%" means wt.% unless otherwise stated, and the gelling agents used were commercial products or synthesized by the known method.

### Example 1

Sample A, a compound of formula (1) where n is 2 and R is C₉ straight-chain alkyl, was tested for its gelating ability with imidazolium tetrafluoroborate (ImBF₄) represented by formula (27), a liquid salt at room temperature, by the inverted test tube method.

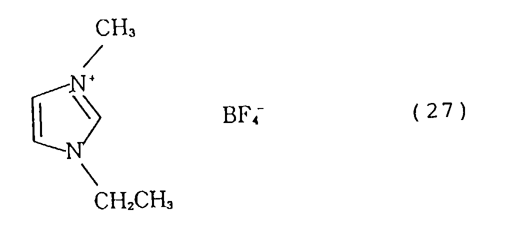

ImBF₄ added with 3% of Sample A was put into a test tube, and heated at about 50°C or higher to dissolve, and then left standing to cool off at 25°C (room temperature) for 1 hour, and then the condition was observed. Mixtures each added with 1% of an organic solvent were also tested. The results are given in Table 3.

A mere mixture of ImBF₄ and Sample A dissolved when heated, but not gelled with crystal precipitation. However, gelation occurred in the presence of a small amount of an organic solvent of various kind. When the gel thus formed was left standing at room temperature for 6 months, neither leakage of ImBF₄ nor discoloration of the gel was observed.

**Table 3**

| ImBF₄/Sample A mixture | Organic solvents added to the mixture | | | | |
|---|---|---|---|---|---|
| | Toluene | THF + Acetonitrile | Ethanol | Methanol | DMF |
| X | ○ | ○ | ○ | ○ | ○ |

| | | | | | |
|---|---|---|---|---|---|
| (notes) ○: The mixture was gelled. | | | | | |
| X: Crystal precipitation occurred, no gelation. | | | | | |

### Example 2

The same procedure as used in Example 1 was carried out except that a compound represented by formula (2) where n is 2 and R is C₁₇ straight-chain alkyl (Sample B) was tested for its gelation ability with ImBF₄. The mixture gelled without adding any organic solvent. When the gel was left standing for 6 months at room temperature, neither leakage of ImBF₄ nor discoloration of the gel was observed. Further, addition of lithium tetrafluoroborate (LiBF₄) as the solid electrolyte did not affect the gel.

### Example 3

The same procedure as in Example 1 was carried out except that Sample C, a compound represented by formula (28) where R¹⁰ is Z-L-valyl-L-valyl, was tested for its gelating ability with ImBF₄. The mixture gelled without adding any organic solvent. When the gel was left standing for 6 months at room temperature, neither leakage of ImBF₄ nor discoloration of the gel was observed.

R¹⁰-NH-CH₂(CH₂)₁₆CH₃ (28)

### Example 4

The same procedure as in Example 1 was carried out except that a 50:50 mixture of Sample C, a compound represented by formula (4) where R is 3,7-dimethyloctyl, and Sample E, a compound represented by formula (5) where R is 3,7-dimethyloctyl, was analyzed for its gelating ability with ImBF₄. The results are given in Table 4.

A mere mixture of ImBF₄ and Samples D and E dissolved when heated, but not gelled with occurring of crystal precipitation. However, gelation occurred in the presence of a small amount of an organic solvent of various kind. When the gel thus formed was left standing at room temperature for 6 months, neither leakage of ImBF₄ nor discoloration of the gel was observed.

**Table 4**

| Mixture of ImBF₄, and Sample D and E | Organic solvents added to the mixture | | |
|---|---|---|---|
| | Toluene | THF + Acetonitrile | DMF |
| X | ○ | ○ | ○ |

### Example 5

The same procedure as in Example 1 was carried out except that the compound represented by formula (6) where n is 2 and R is a straight-chain alkyl group having a carbon number of 17 (Sample F) was tested for its gelation capability with ImBF₄. The mixture gelled without adding any organic solvent. When the gel was left standing for 6 months at room temperature, neither leakage of ImBF₄ nor discoloration of the gel was observed. Further, addition of lithium tetrafluoroborate (LiBF₄) or lithium hexafluorophosphate (LiPF₆) as the solid electrolyte did not affect the gel.

### Example 6

The same procedure as used in Example 5 was carried out except that ImBF₄ was replaced by 1-butylpyridiumtetrafluoroborate (PyBF₄) represented by formula (29) below as the salt being liquid at room temperature, to test the gelation capability of the gelling agent. The mixture gelled without adding any organic solvent. When the gel was left standing for 6 months at room temperature, neither leakage of PyBF₄ nor discoloration of the gel was observed. Further, addition of lithium tetrafluoroborate (LiBF₄) or lithium hexafluorophosphate (LiPF₆) as the solid electrolyte did not affect the gel.

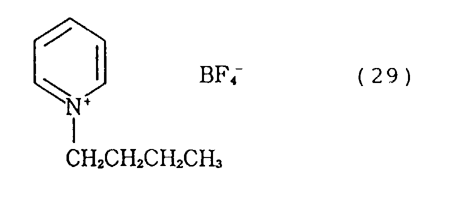

### Example 7

The same procedure as used in Example 1 was carried out except that the derivative represented by formula (7) where R is C₁₆ straight-chain alkyl (Sample G) was tested for its gelation capability with ImBF₄. The mixture gelled when a small amount of chloroform was added. When the gel was left standing for 6 months at room temperature, neither leakage of ImBF₄ nor discoloration of the gel was observed.

### Example 8

The same procedure as used in Example 1 was carried out except that the derivative represented by formula (8) where R is C₁₇ straight-chain alkyl (Sample H) was tested for its gelation capability with ImBF₄. The mixture gelled when a small amount of chloroform was added. When the gel was left standing for 6 months at room temperature, neither leakage of ImBF₄ nor discoloration of the gel was observed.

### Example 9

The same procedure as used in Example 1 was carried out except that the derivative represented by formula (9) where R is C₁₀ straight-chain alkyl (Sample I) was tested for its gelation capability with ImBF₄. The mixture gelled without adding any organic solvent. When the gel was left standing for 6 months at room temperature, neither leakage of ImBF₄ nor discoloration of the gel was observed. Further, addition of lithium tetrafluoroborate (LiBF₄) or lithium hexafluorophosphate (LiPF₆) as the solid electrolyte did not affect the gel.

### Example 10

The same procedure as used in Example 1 was carried out except that the derivative represented by formula (10) where R⁵ is a straight-chain alkyl group having a carbon number of 17 substituted with one hydroxyl group (12-hydroxystearic acid, Sample J) was tested for its gelation capability with ImBF₄. The mixture gelled when chloroform was added. When the gel was left standing for 6 months at room temperature, neither leakage of ImBF₄ nor discoloration of the gel was observed.

### Example 11

The same procedure as used in Example 1 was carried out except that the derivative represented by formula (11) where R is C₁₁ straight-chain alkyl and R¹ and R² are butyl (N-launoyl-L-glutamic acid-α, γ-bis-n-butylamide, Sample K) was tested for its gelation capability with ImBF₄. The mixture gelled when a small amount of chloroform was added. When the gel was left standing for 6 months at room temperature, neither leakage of ImBF₄ nor discoloration of the gel was observed.

### Example 12

The same procedure as used in Example 1 was carried out except that the derivative represented by formula (12) where R¹ and R² are isopropyl (Sample L) was tested for its gelation capability with ImBF₄. The mixture gelled when a small amount of chloroform was added. When the gel was left standing for 6 months at room temperature, neither leakage of ImBF₄ nor discoloration of the gel was observed.

### Example 13

The same procedure as used in Example 1 was carried out except that the derivative represented by formula (13) where R¹ is 3,7-dimethyloctyloxycarbonylmethyl group and R² is benzyl group [cyclo(L-asparagyl-L-phenylalanyl), Sample M] was tested for its gelation capability with ImBF₄. The mixture gelled when a small amount of chloroform was added. When the gel was left standing for 6 months at room temperature, neither leakage of ImBF₄ nor discoloration of the gel was observed.

### Example 14

The same procedure as used in Example 1 was carried out except that the derivative represented by formula (14) (Sample N) was tested for its gelation capability with ImBF₄. The mixture was gelled when chloroform was added. When the gel was left standing for 6 months at room temperature, neither leakage of ImBF₄ nor discoloration of the gel was observed.

### Example 15

The same procedure as used in Example 1 was carried out except that the derivative represented by formula (15) where R is a decyl group having a carbon number of 10 (Sample O) was tested for its gelation capability with ImBF₄. The mixture gelled when chloroform was added. When the gel was left standing for 6 months at room temperature, neither leakage of ImBF₄ nor discoloration of the gel was observed.

### Example 16

The same procedure as used in Example 1 was carried out except that the derivative represented by formula (16) (Sample P) was tested for its gelation capability with ImBF₄. The mixture gelled when chloroform was added. When the gel was left standing for 6 months at room temperature, neither leakage of ImBF₄ nor discoloration of the gel was observed.

### Example 17

The same procedure as used in Example 1 was carried out except that the compound represented by formula (17) where q is 5, m is 18 and R⁹ is isopropyl (Sample Q) was tested for its gelation capability with ImBF₄. The mixture gelled without adding any organic solvent. When the gel was left standing for 6 months at room temperature, neither leakage of ImBF₄ nor discoloration of the gel was observed. Further, addition of lithium tetrafluoroborate (LiBF₄) or lithium hexafluorophosphate (LiPF₆) as the solid electrolyte did not affect the gel.

### Example 18

The same procedure as used in Example 17 was carried out except that 1-butylpyridiumtetrafluoroborate (PyBF₄) represented by formula (29) was used as the liquid salt at room temperature, to test gelation capability of the gelling agent. The mixture gelled without adding any organic solvent. When the gel was left standing for 6 months at room temperature, neither leakage of PyBF₄ nor discoloration of the gel was observed. Further, addition of lithium tetrafluoroborate (LiBF₄) or lithium hexafluorophosphate (LiPF₆) as a solid electrolyte did not affect the gel.

### Example 19

The same procedure as used in Example 1 was carried out except that the compound represented by formula (18) where both R⁶ and R⁷ are methyl group (Sample R) was used as the gelling agent and potassium sorbate was added as the stabilizer. The mixture gelled without adding any organic solvent. When the gel was left standing for 6 months at room temperature, neither leakage of ImBF₄ nor discoloration of the gel was observed.

### Example 20

A compound represented by formula (19) where R₉ is dodecyl group, R₁₀ is ethyl group and R₁₂ is isopropyl group (Sample AA) was tested in the same manner as in Example 1 for its gelation capability with PyBF₄ represented by above formula (29) using the inverted test tube method.

PyBF₄ added with 3% Sample AA was put into a test tube, and heated at about 50°C or higher to dissolve, and then left standing to cool off at 25°C (room temperature) for 1 hour. It was observed that the mixture gelled. The mixture also gelled when it was cooled rapidly in a cooling medium, e.g., ice water or dry ice, instead of having been allowed to stand at room temperature. When these gels were left standing for 6 months at room temperature, neither leakage of PyBF₄ nor discoloration of the gel was observed.

### Example 21

The same procedure as used in Example 20 was carried out except that the compound represented by formula (20) where R₉ to R₁₁ are octadecyl (Sample BB) was tested for its gelation capability with PyBF₄. The mixture gelled without adding any organic solvent, as was the case with Example 20. When the gel was left standing for 6 months at room temperature, neither leakage of PyBF₄ nor discoloration of the gel was observed. Lithium tetrafluoroborate (LiBF₄) added to PyBF₄ BY 50% as the solid electrolyte, showed no effect on the gel.

### Example 22

The same procedure as used in Example 20 was carried out except that the compound represented by formula (21) where each of R₉ and R₁₀ is octadecyl group and m is 2 (Sample CC) was tested for its gelation capability with PyBF₄. The mixture gelled without adding any organic solvent, as was the case with Example 20. When the gel was left standing for 6 months at room temperature, neither leakage of the PyBF₄ nor discoloration of the gel was observed.

### Example 23

The same procedure as used in Example 20 was carried out except that imidazolium tetrafluoroborate (ImBF₄) represented by formula (27) was used as the liquid salt at room temperature instead of PyBF₄, to analyze gelation capability of Sample CC. The mixture gelled without adding any organic solvent, as was the case with Example 22. Neither leakage of ImBF₄ nor discoloration of the gel was observed, when the gel was left standing for 6 months at room temperature.

### Example 24

The compound represented by formula (22) where R₉ is octyl group (Sample DD) was used. PyBF₄ with a small amount of γ-butylolactone and 3% of Sample DD was heated at around 50°C or higher to dissolve the mixture in a test tube, and then left standing at 25°C (room temperature) for 1 hour, to find out that the mixture gelled. When the mixture was heated and cooled rapidly in the same manner as in Example 20, the mixture gelled. Neither leakage of PyBF₄ nor discoloration of the gel was observed, when the gel was left standing for 6 months at room temperature.

### Example 25

A compound (Sample EE) represented by formula (23) where n is 6 and a compound (Sample FF) represented by formula (24) where n is 6 were mixed in an 1:1 mole ratio and the gelation capability with PyBF₄ was tested in the same manner as in Example 20 to find out that the mixture gelled. Neither leakage of PyBF₄ nor discoloration of the gel was observed, when the gel was left standing for 6 months at room temperature.

### Example 26

The same procedure as used in Example 20 was carried out except that a compound (Sample GG) represented by formula (25) where each of R₉ and R₁₀ are octadecyl group, R₁₁ is methyl and X is chlorine was tested for its gelation capability with PyBF₄. It was found that the mixture gelled. Neither leakage of PyBF₄ nor discoloration of the gel was observed, when the gel was left standing for 6 months at room temperature.

### Example 27

The same procedure as used in Example 26 was carried out except that imidazolium tetrafluoroborate (ImBF₄) represented by formula (27) was used in place of PyBF₄, to analyze gelation capability of Sample GG. The mixture gelled without adding any organic solvent, as was the case with Example 26. Neither leakage of ImBF₄ nor discoloration of the gel was observed, when the gel was left standing for 6 months at room temperature.

### Example 28

The same procedure as used in Example 20 was carried out except that β-cyclodextrin represented by formula (26) where p is 7 (Sample HH) was tested for its gelation capability with PyBF₄. It was confirmed that the mixture gelled when a small amount of water was added. Neither leakage of PyBF₄ nor discoloration of the gel was observed, when the gel was left standing for 6 months at room temperature.

### Comparative Example 1

Polymethyl methacrylate having a molecular weight of 7,000 was added to ImBF₄, and the mixture was heated at 90°C and cooled to test its gelation capability. When the added amount of polymethylmethacrylate was 20% or less, the mixture did not gelate, showing leakage of ImBF₄.

### Comparative Example 2

Polymethyl methacrylate having a molecular weight of 7,000 was added to PyBF₄, and the mixture was heated at 90°C and cooled to test its gelation capability by the inverted test tube method. When the added amount of polymethylmethacrylate was 20% or less, the mixture did not gelate, showing leakage of PyBF₄.

### Example 29

Conductivity of the gel electrolyte prepared in Example 1 was measured. A cell was prepared by depositing gold onto the glass substrate to make the electrode area of 1 cm². The gel electrolyte prepared in Example 1, melted by heating at around 80°C or higher, was injected into the cell, and left standing at 25°C (room temperature) for gelation. Its impedance was measured by using an impedance meter (SOLARTRON, SI1260). As a control, impedance of the same liquid electrolyte as used in Example 1 was also measured. The measurement was done at 30, 40, 50, 60 and 70°C.

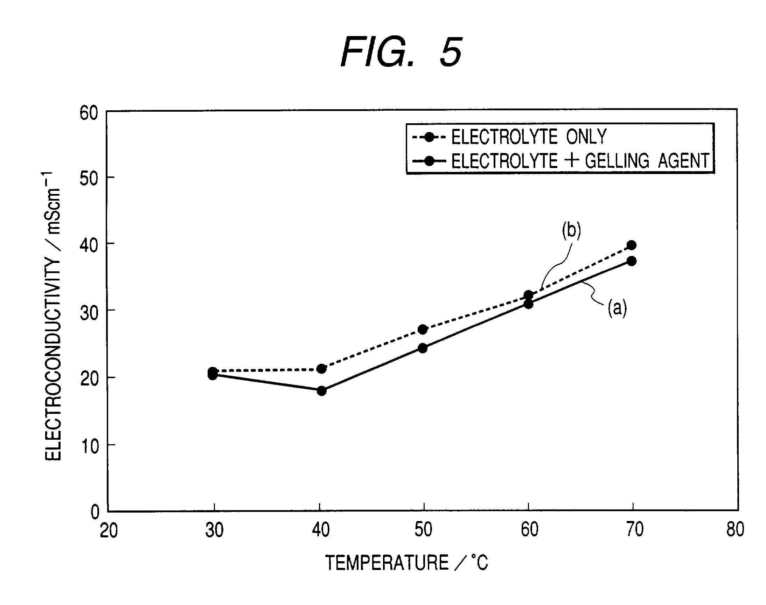

The results are given in FIG. 5, where (a) is for the gel electrolyte prepared by Example 1 and (b) for the liquid electrolyte.

As shown in FIG. 5, the gel electrolyte has almost the same conductivity as the liquid electrolyte, even when incorporated in a self-assembling compound.

## Claims

1. A gel electrolyte containing at least a gelling agent and a material of high ion conductivity being liquid at working temperature.

2. The gel electrolyte of claim 1, wherein said material of high ion conductivity is a salt being liquid at room temperature.

3. The gel electrolyte of claim 1, wherein said gelling agent is a self-assembling compound which gels forming a polymer associated body by the aid of an intermolecular force, such as hydrogen bonding, coordination bonding and the like.

4. The gel electrolyte of claim 3, wherein said self-assembling compound has at least one group, as the substituent showing capability of hydrogen bonding, selected from the group consisting of carbamate, amide, urea, carboxyl, alkoxy, hydroxyl, phosphate, amino and ammonium groups.

5. The gel electrolyte of claim 3 or 4, wherein said self-assembling compound is selected from the group consisting of the compounds represented by the following formulae (1) to (26). 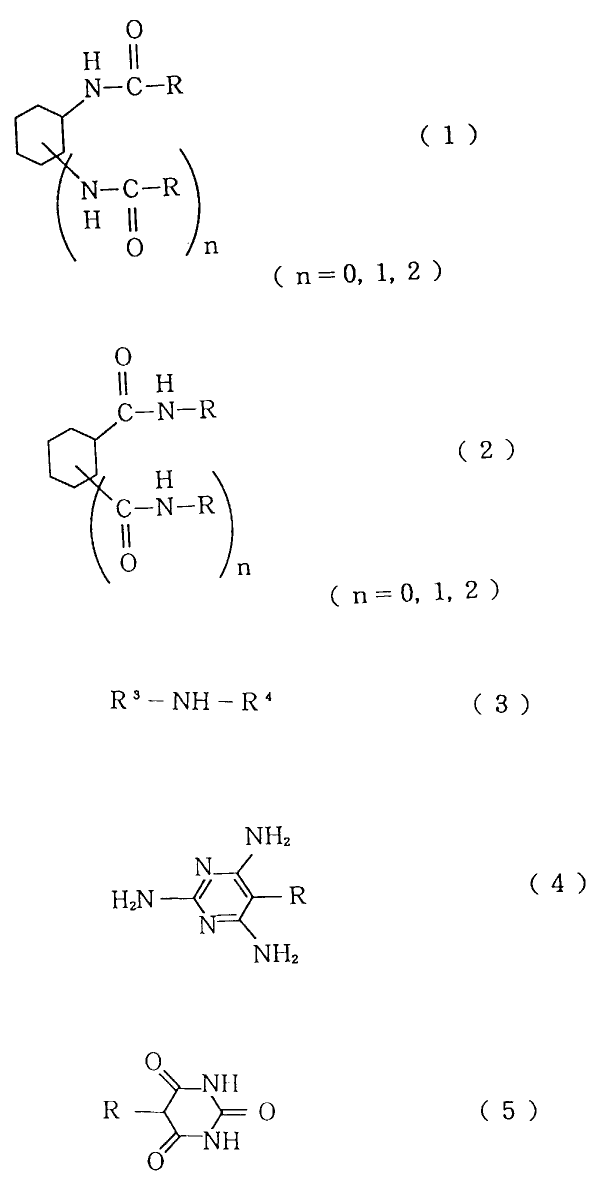 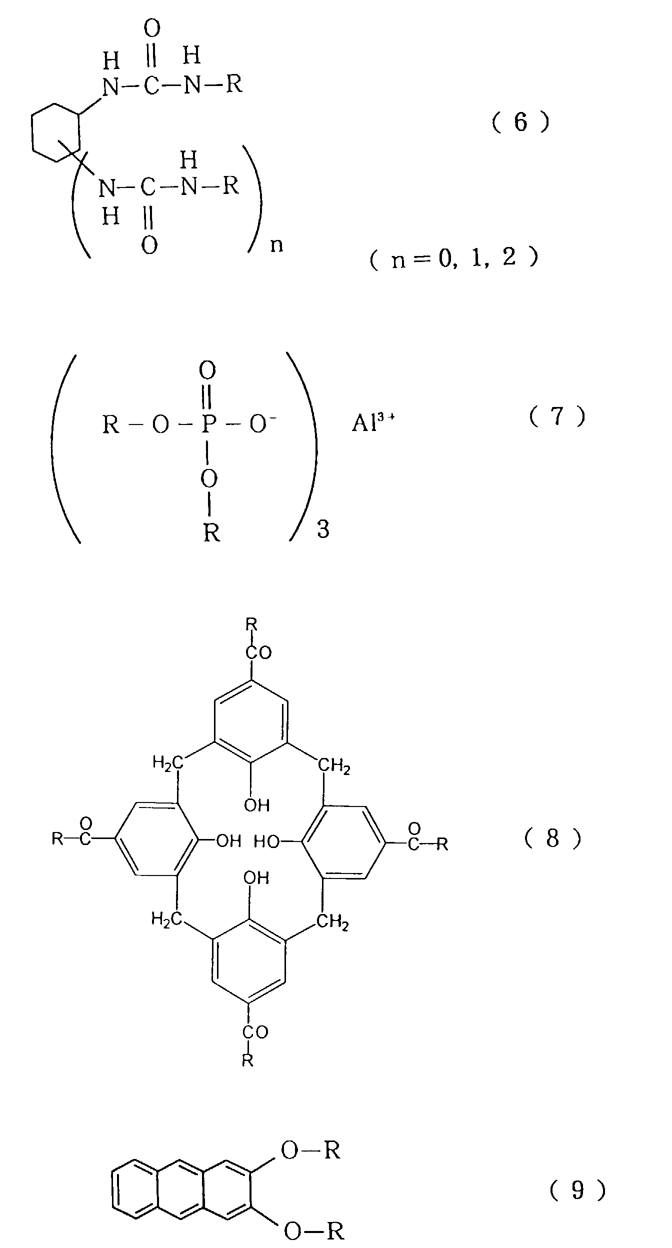 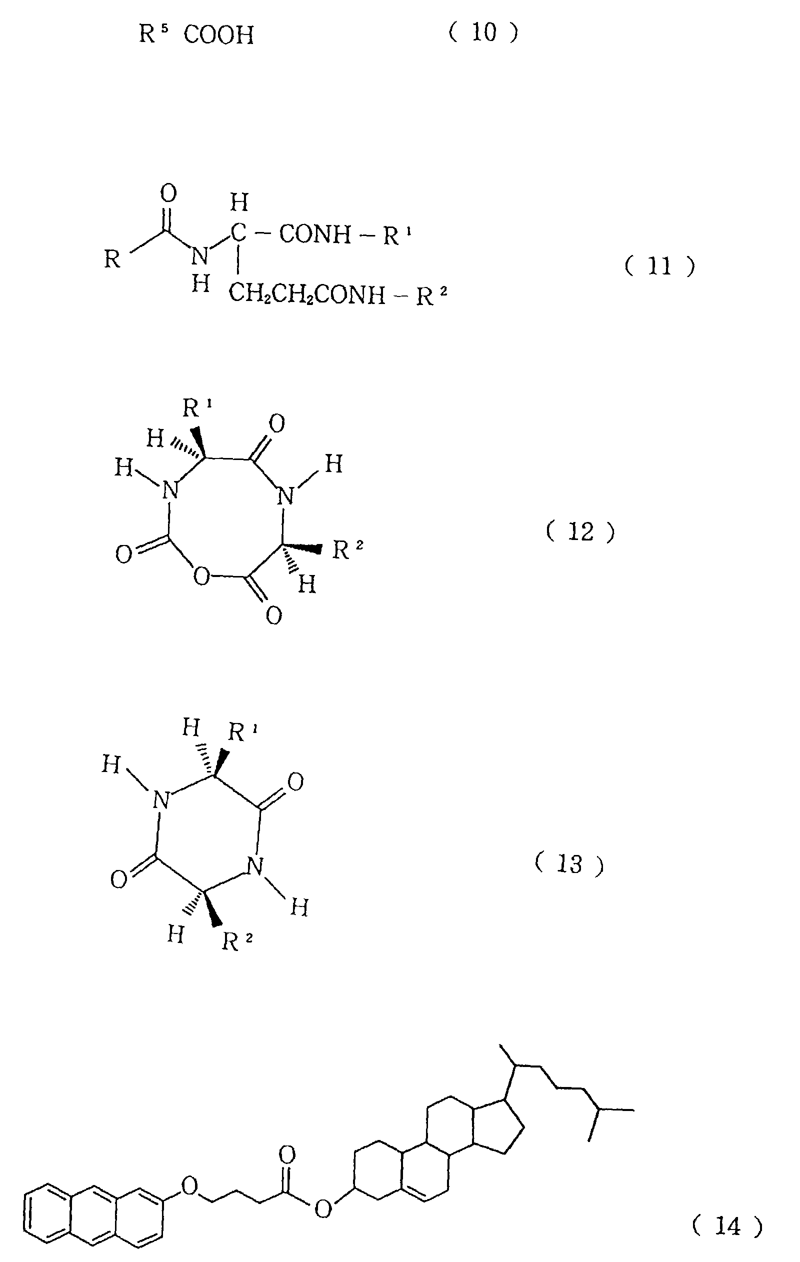 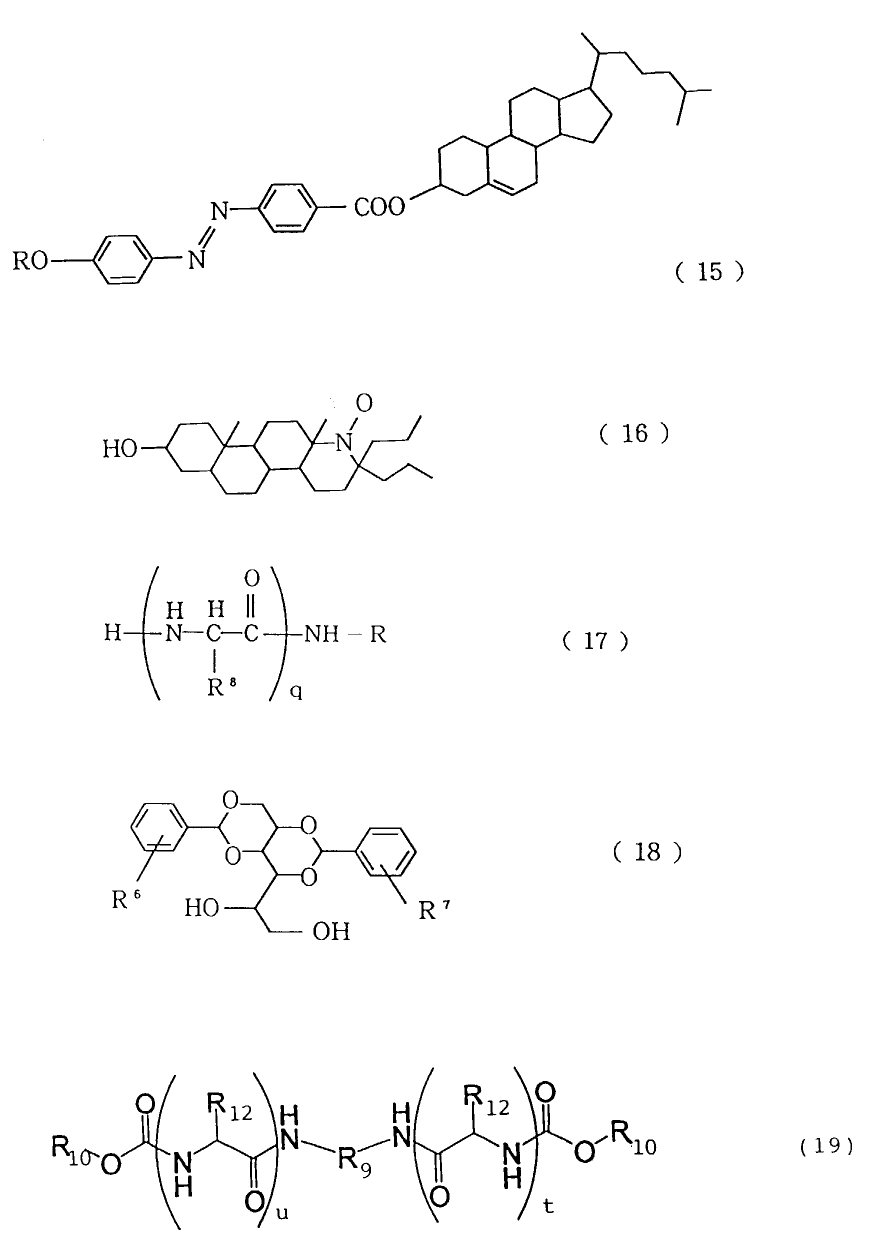 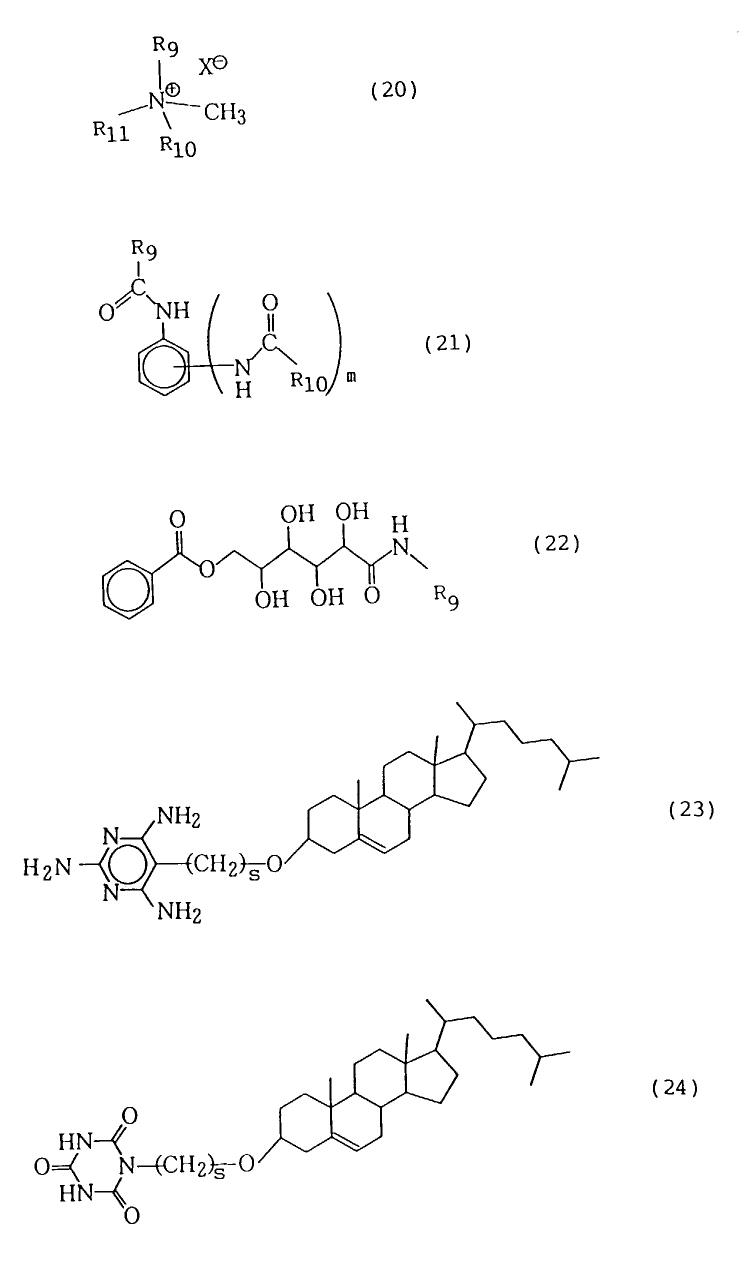 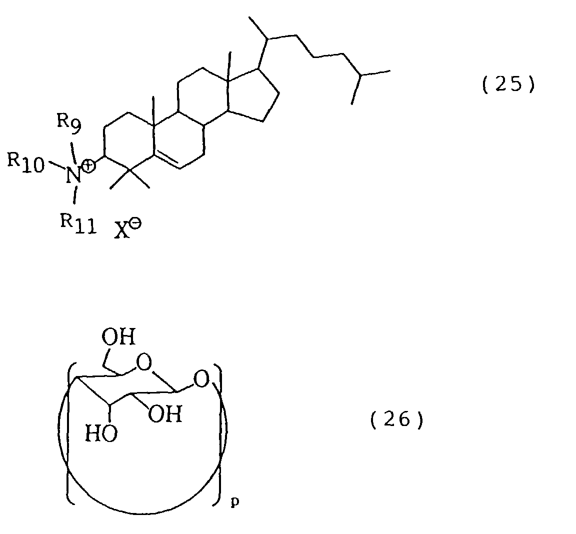 wherein, R, R₁ and R₂ are each hydrogen, or a straight-chain or branched aliphatic hydrocarbon group having a carbon number of 1 to 29; R₃ is an amino acid monomer or dimer with a protected amino group; R₄ is an aliphatic hydrocarbon having a carbon number of 1 to 29 or an aryl group; R₅ is a straight-chain aliphatic group having a carbon number of 1 to 29 and being substituted with one hydroxyl group; R₆ and R₇ are each an aliphatic hydrocarbon group having a carbon number of 1 to 29 or an aryl group; R₈ is hydrogen, or an aliphatic hydrocarbon group having a carbon number of 1 to 5 or aryl group; n is 0, 1 or 2; q is an integer of 2 to 20; R₉, R₁₀ and R₁₁ are each hydrogen, or a straight-chain or branched aliphatic hydrocarbon group having a carbon number of 1 to 29; R₁₂ is a side chain of an amino acid, or an alkyl or aryl group; X is a halogen; p is an integer of 6 to 8; m is an integer of 0 to 5 and s is an integer of 0 to 29, and u and t are an integer of 1 to 500.

6. A cell comprising an anode, an electrolyte and a cathode, wherein said electrolyte is the gel electrolyte of any one of claims 1 to 5.

7. An electrochromic element comprising a pair of transparent electrodes between which an electrochromic layer which develops color on reduction and a transparent ionic conductor layer exist, wherein said ionic conductor layer contains the gel electrolyte of any one of claims 1 to 5.
